## Europäisches Patentamt
## European Patent Office
## Office européen des brevets

(11) Publication number: **0 112 484**
**B1**

(12) **EUROPEAN PATENT SPECIFICATION**

(45) Date of publication of patent specification: **17.02.88**

(51) Int. Cl.⁴: $C\ 23\ G\ 5/04$, $B\ 01\ D\ 5/00$

(21) Application number: **83111468.1**

(22) Date of filing: **17.11.83**

(54) Apparatus and method for reducing solvent losses.

(30) Priority: **28.12.82 US 453979**

(43) Date of publication of application:
**04.07.84 Bulletin 84/27**

(45) Publication of the grant of the patent:
**17.02.88 Bulletin 88/07**

(84) Designated Contracting States:
**DE FR GB IT**

(56) References cited:
**GB-A-2 051 595**
**US-A-2 091 182**
**US-A-2 823 174**
**US-A-3 375 177**

(73) Proprietor: **ALLIED CORPORATION**
**Columbia Road and Park Avenue P.O. Box 2245R
(Law Dept.)
Morristown New Jersey 07960 (US)**

(72) Inventor: **Osterman, Harry Fred**
**925 Minisink Way
Westfield New Jersey 07060 (US)**
Inventor: **Rand, Burton**
**195 Eighth Avenue
Collegeville Pennsylvania 19426 (US)**

(74) Representative: **Myerscough, Philip Boyd et al
J.A.Kemp & Co. 14, South Square Gray's Inn
London, WC1R 5EU (GB)**

Courier Press, Leamington Spa, England.

## Description

This invention relates to a novel apparatus and process for vapor degreasing which use an open top vessel and more particularly to an improvement in such apparatus and process which has the purpose of conserving solvent losses occurring from vapor-air diffusion.

It is recognized in the art of degreasing that the mixing of solvent vapor with air is very costly in terms of solvent loss. Because halogenated hydrocarbons which are most frequently employed as solvent in degreasing systems are heavier than air, trichloroethylene being an example, the vapor can be controlled by a simple condenser coil or jacket near the top of the degreasing tank. However, when small concentrations of solvent vapor and air intermix, the much lighter combined mixture will be carried off by normal air movement. Even in a quiet atmosphere, the loss due to diffusion in air is considerable. Drafts or improper introduction and removal of the work pieces aggravate the vapor (solvent) loss substantially at this rate.

The normal diffusion of solvent in air is nearest the theoretical minimum when the degreaser is in an area where the working atmosphere is as quiet as possible. Installation of baffles or shields helps control air movement. Even under ideal conditions, a degreaser is preferably constructed with a freeboard (height of sidewall above the vapor line) preferably of the order of 60% or more of the machine width.

In operation, the degreaser should be large enough and have enough heat input to handle the normal work load. Overloading increases solvent loss. For example, as the work basket is inserted into the degreaser opening, there is considerable intermixing of air and vapor and the resulting turbulance increases the tendency for vapor loss. To stem this very considerable potential loss of solvent by diffusion, a second condenser near the top of the degreaser, which is sometimes referred to as a freeboard chiller, has been devised to suppress the tendency of solvent vapors to escape through the open top of the degreasing apparatus. A vapor condenser or freeboard chiller system of this kind is disclosed in the Rand U.S. Patent 3,375,177 which utilizes a second condenser above a first condenser and below the upper edge of the open top degreasing vessel into which the parts to be treated are lowered and raised when the parts are withdrawn.

In a system of this kind, vapors are generated in an open top vessel by boiling a solvent in a heated chamber. The generated vapors rise within the vessel and contact the work piece(s) to be cleansed, generally, metal parts, supported upon a work rest within the vessel. The vapors will dissolve the grease on the metal parts.

The vessel used in degreasing apparatus of this kind is open to provide ready access to the interior of the vessel. The use of an open access vessel in degreasing apparatus, while of great convenience from the standpoint of practical access, has caused several problems. These include: (1) excessive loss of the expensive solvent rendering the degreasing operation costly; (2) noxious solvent odors emitted from the apparatus; and (3) a toxic hazard to personnel through air pollution of the work place and the environment.

As noted in U.S. Patent 3,375,177, the objective of the freeboard chiller is to control the vapors generated by the apparatus before they are expelled into the atmosphere. Prior attempts to stem such vapor losses, such as by placing cold water condensers around the inside walls of the degreaser for condensing the generated vapors before they reach the atmosphere or use of a water jacket encircling the degreaser at approximately the vapor line, have not been found completely satisfactory. In such prior systems, the tendency for the lighter vapors generated from the solvent to pass the cooling coils and escape to the atmosphere has not been obviated. Also, in prior installations, low temperature (less than 32°C) refrigeration coils have been installed in the freeboard zone of degreasers above the primary condensing coils. The cold air blanket produced by these coils acts as a thermal inversion tending to trap rising air/solvent vapor mixtures and effectively condensing a portion of the solvent vapor, thus preventing its escape from the degreasers. Substantial loss reductions have been reported with normal loss reductions of 40% being represented in the industry.

The known low temperature freeboard chillers, such as the kind described in U.S. Patent 3,375,177 are currently incorporated in new degreasers at the time of manufacture, and although such freeboard chillers may be retrofitted on existing degreasers, it is necessary that trained factory personnel be employed for installation. During installation, the trained factory person must cut, fit, mount and solder finned refrigeration tubing around the inner periphery of the degreaser *in situ* in the freeboard zone and then connect said tubing to a low temperature refrigeration condensing unit. The system must then be checked for leaks and charged with a refrigerant gas. Such installation requires sizeable expenditures. Downtime is also a significant drawback. Also, because of the exacting nature of this type of installation, relative to the fitting of components and preclusion of leaks, as well as the necessity to operationally check the equipment, the purchase of the necessary components for self-assembly by the degreaser owner, as a rule, has not been attempted. It is evident that the installed cost of freeboard chillers is considerably higher due to the travel and living costs for the factory trained personnel which must of necessity be borne by the purchaser. Another limitation in the matter of installation of current freeboard chillers is the reduction in the top opening of the degreaser (6.3 cm per side) which results and which can preclude the retrofitting of the solvent saving device due to insufficient clearance for existing workload sizes or the reduction in the maximum workload size that can be placed in a degreaser.

It is obvious from the above that it would be advantageous to develop a low temperature compact freeboard chiller that could be shipped as a completed, sealed with refrigerant included and pretested unit, i.e. a module, that could be installed or retrofitted by the ultimate user, thus eliminating the very substantial travel and living costs from the purchase price required when factory trained personnel must install such systems.

The invention provides an apparatus comprising:

(a) an open-top receptacle adapted to be partially filled with a volatile solvent,

(b) means adjacent the bottom of said receptacle for containing the solvent to be vaporized, and means to vaporize the solvent,

(c) a first condenser supported by said receptacle spaced above the solvent for condensing vapors generated from said solvent and thereby defining the upper limit of a vapor zone above the solvent,

(d) a retrofittable second condenser supported by said receptacle above said first condenser and below the upper edge of the receptacle for condensing solvent vapors not condensed by said first condenser, said second condenser being provided on one portion only of the interior of said open top receptacle and generating a cold air barrier that extends over the top of the vapor zone, and

(e) a condensate collection trough below the elevation of said first condenser for collecting condensate and preventing condensed moisture from mixing with the solvent.

Preferably the retrofittable second condenser in the apparatus of the invention comprises:

(a) a plurality of coolant coils mounted on a support,

(b) a protective guard for said coils, said coil guard being mounted on said coil support, and

(c) means for attaching said support so that the second condenser occupies only a portion of the peripheral interior of said open-top receptacle.

The invention further provides a method for condensing solvent vapors generated in an open-top receptacle before they can be discharged into the atmosphere, the method comprising the steps of:

(a) using a first condenser to define a vapor zone immediately above the solvent in said receptacle, and

(b) entraining a substantial portion of the solvent vapors not condensed by said first condenser by a cold air barrier which is generated from a second cooling source on only one side of the interior of said open top receptacle and migrates across and forms a blanket above said first condenser, said second cooling source being provided by a retrofitted second condenser disposed only on a portion of the interior of said receptacle.

In accordance with the invention, a unit comprising refrigerant coils which affords adequate heat exchange capacity, i.e. equal to the capacity which surrounds the opening in the degreasing vessel, is disposed along one side only of the degreaser vessel rather than on all four sides. This one-sided freeboard chiller, contrary to the expected loss of effective vapour suppression when compared to an open top unit as in U.S. Patent 3,375,177 in which the coil surrounds the opening, produced a vapor suppression blanket that is surprisingly effective. The one-sided unit constructed and disposed in accordance with the invention not only affords a substantial economy, including the relative ease of installation, but offers the further advantage of introducing less interference to work piece(s) access, i.e. less obstruction of passage into the open top degreasing vessel.

The degreasing apparatus of the kind with which the invention is used generally comprises an open-topped receptacle including a bottom wall and a plurality of upright side walls. A solvent partially fills the receptacle and is used to cleanse or degrease, e.g. to remove oil from metal parts. Suitable solvents for such a purpose include various halocarbons, e.g. trichloroethylene, perchloroethylene, methylene chloride, 1,1,1-trichloroethane and various fluorocarbons such as FC-11 and trichlorotrifluoroethane and the azeotropes thereof.

Mounted adjacent the bottom wall and immersed within the solvent are a plurality of heating coils that are adapted to boil the solvent and generate vapors of the cleansing volatile solvent. The vapors are adapted to dissolve oil and grease on the metal parts, thus cleaning them.

As first condenser a plurality of water-carrying coils supported by the upright walls of the receptacle are adapted to ring or surround the upright walls. The vapors which come in contact with the cooling coils condense and are collected in a trough supported by the upright walls beneath the coils.

A cold water jacket preferably encircles the degreaser at approximately the vapor condensing line to cool the metal walls of the receptacle because if the walls are allowed to warm, light solvent vapors will rise and escape from the open top of the receptacle. A suitable arrangement of pumps and heat exchanging equipment of a conventional kind are provided and do not form part of the present invention.

While a substantial portion of the vapors are condensed by the condensing coils, the lighter vapors, as well as the vapors in the middle of the receptacle, usually are not.

In order to condense the lighter vapors before they reach the atmosphere, a freeboard chiller unit retrofittable second condenser comprising cooling coils is positioned on one upright wall and disposed and supported preferably parallel to one of the walls of the longest dimension of the cleaning apparatus or tank. This freeboard chiller unit comprises a module discrete from and not in fluid communication directly or indirectly with the conventional condensers (lower) coil of the cleaning or degreasing apparatus. The coils of this freeboard chiller are chilled by mechanical refrigeration to temperatures not above 0°F (−18°C) and preferably between −25°F (−31.7°C) and −35°F (−37.2°C). The lowest coil of the freeboard chiller module is located within eight inches (20.32 cm) of the vapor line and, preferably, at a distance of six inches (15.2 cm) or less, i.e., 15 cm, above the vapor line as determined by the first condenser.

The coils of the freeboard chiller are appropriately connected to a compressor and pump unit and refrigerant is pumped through the coils to maintain the coils at a temperature not above 32°F (0°C).

Reference is made below to the accompanying drawings in which:

Fig. 1 illustrates perspectively a freeboard chiller modular unit in accordance with the invention installed on one side of the open top degreaser, a fragment of which is illustrated.

Fig. 2 is an elevational sectional view taken along line 2—2 of Fig. 1.

Fig. 3 is an elevational sectional view taken along line 3—3 of Fig. 2.

Fig. 4 is an elevational sectional view similar to Fig. 2 but showing an alternative embodiment.

Fig. 5 is an elevational sectional view taken along line 5—5 of Fig. 4.

While the above-referenced U.S. Patent 3,375,177 describes the use of a freeboard chiller to prevent the loss of solvent vapor from the open top degreaser apparatus, the installation of freeboard chillers of the kind disclosed in that patent requires condenser coils that surround the opening and as noted above are relatively expensive particularly when retrofitting existing units. To alleviate the noxious and sometimes hazardous nature of the vapors defusing from an open top degreaser, lip vent exhausts have been installed along one or two sides of existing degreasers. Such exhausts, while effective in removing the solvent vapors prior to their entering the workers's area, double and sometimes triple solvent losses by creating air turbulence in and above the freeboard area of the degreaser. This effect is particularly pronounced with smaller degreasers with short freeboards having less than eighteen inches (45.7 cm) between the vapor line and the top opening of the degreaser. Because a freeboard chiller can reduce emissions into the work area enough to eliminate the need for an exhaust equipment, the use of a freeboard chiller is a preferred means of protecting workers and conserving solvents. However, in the past the relatively high cost of an effective freeboard chiller has precluded the retrofitting of cleansing or degreasing apparatus with conventional freeboard chillers. This is particularly so with respect to smaller degreasers because of the space reduction in the work piece access opening resulting after the retrofit. The one-sided freeboard chiller makes such retrofitting feasible in that the modular freeboard chiller unit may be shipped to the user in a substantially self-contained unit. The user can then install it on the degreaser without the concomitant downtime and expense of installations my manufacturers' technicians that would require breaking into the integrity of the existing system. Additionally, original equipment manufacturers who build degreasing apparatus will find that the one-sided configuration allows the incorporation of such freeboard chillers on new degreasers shipped without increasing the physical size of the present design.

In order to obtain the desired effect of a freeboard chiller in accordance with the invention, and having determined the heat extraction capacity (British Thermal Units per foot of perimeter), the required capacity needed to effectively conserve the solvent vapors can be achieved with a suitable number of passes of finned tubing on one side operating at a temperature in the range of from −20°F (−28.9°C) to −40°F (−40°C).

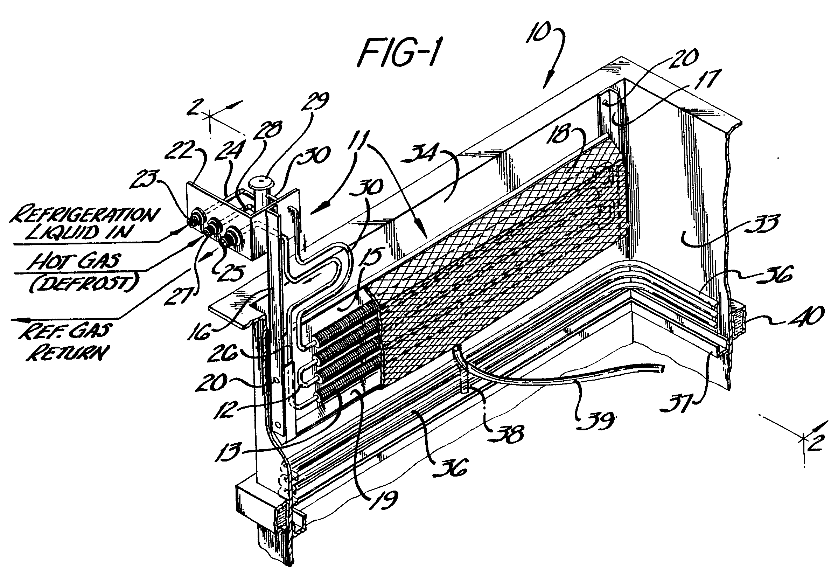

To determine the feasibility of building and shipping a totally completed and tested freeboard chiller that may be installed in an existing degreasing unit that does not have a freeboard chiller, a system was designed for an existing water cooled vapor degreaser that had a top opening of 2 feet by 4 feet (30.5 cm×61 cm). In constructing the unit the space reduction problem of a more conventional four-sided coil was avoided by placing the total heat exchange capacity along one side of the degreaser as illustrated in Fig. 1. By so doing it might be assumed that the performance of the system would be reduced compared to a system with finned tubing around all four sides. Following installation, tests were run with the degreaser being operated with trichlorotrifluoromethane, fluorocarbon 113. The first, or base-line test, was run without the freeboard chiller turned on and the test run indicated a loss of 0.1505 lbs per hour per square foot (0.7348 kg/sq. meter/hr.) of vapor air interface. Under identical conditions, with the exception that the freeboard chiller was turned on and was operating at a measured temperature of −35°F (−37.2°C), losses were measured at 0.0598 lbs per hour per square foot (0.292 kg/sq. meter/hr.), a reduction in solvent loss of 60.2%. This was a totally unexpected magnitude since tests on a similar sized degreaser operating in the same area with a conventional four-sided freeboard chiller showed loss reductions of 57%. It had been hoped but not predicted that the one sided coil would be able to produce savings on the order of 30 to 40%.

In an effort to ascertain an explanation for the unexpected high solvent savings, the cold air blanket was probed with the thermocouple at various locations across this freeboard zone strata in the degreaser, above the vapor line, moving in a direction away from the one-sided modular coil of the invention. The measured temperature varied from a low of −1°F (−18.3°C) in front of the coil to +14°F, (−10°C) at the far side of the degreaser. This relatively small gradient was also unexpected in that the lowest previously measured blanket temperature with a four-sided freeboard chiller was 11°F (−6.8°C) at the centroid.

Prior to the test it had been postulated that while producing the necessary coil air blanket above the vapor zone, the one-sided low temperature coil would produce a convection air current which would flow down from the coil, across the degreaser and rise to the top of the freeboard on the opposite side of the machine from the coil. Such air movement while slow, would tend to produce solvent losses that were greater than those achieved with a (four-sided) system that ringed the opening.

Having found that the solvent loss measurements with the one-sided system were surprisingly beneficial in comparison to the four-sided system, further testing was done to better understand the mechanism.

Such test consisted of injecting smoke at a point immediately below the low temperature coil in the freeboard zone, i.e., in the space between the cold air blanket and the vapor line, and observing its motion. It was found that the smoke moved across the degreaser from the freeboard chiller to the far side. Moreover, as opposed to moving up the wall and out of the degreaser, the smoke moved across the top of the cold air blanket and concentrated at the low temperature coils. This demonstrated that the slow circular air motion within the freeboard area caused by the one-sided coil of the kind provided by the present invention tends to drag escaping vapors to the low temperature area where they are condensed and returned to the system.

The details of the apparatus of the invention are better visualized by reference to the figures of the drawing. As shown in Fig. 1 the "freeboard chiller" apparatus 11 which functions to generate a blanket of cold air over the vapor zone in a degreasing or cleaning unit is depicted as being secured to the interior of the open container 10. A fragment only of the open cleaning apparatus container 10 is illustrated and shows a transverse wall 33 and a longitudinal wall 34 of such cleaning apparatus. The freeboard chiller or modular unit 11 comprises a plurality of coils 12 preferably equipped with fins 13 and mounted on a back plate or support 15. The unit 11 is provided with suitable mounting brackets 16 and 17 which facilite a mounting of the unit 11 on the degreaser unit 10 such as by fasteners 20. The finned coils 12 are preferably equipped with a protective shield 18. Line connectors for the chiller 11 are made through a suitable mounting plate 22 and comprise a liquid refrigerant input line 24 with connector 23, a refrigerant return line 26 with connector 25 and a hot gas (defrost) line 28 with connector 27. The hot gas line 28 is connected to the evaporator feed line 30 at a point downstream from the expansion valve 29. The chiller unit may optionally include a condensate collection trough 19 which may suitable be mounted on the same support 15 on which the cooling coils 12 are mounted. The chiller 11 is positioned in the degreasing unit slightly above the primary condensing coils 36. The primary condensing coils 36 define the vapor line of the degreaser 10. A water jacket 40 is also preferably employed and is situated around the outside walls of the unit 10 substantially at the vapor line.

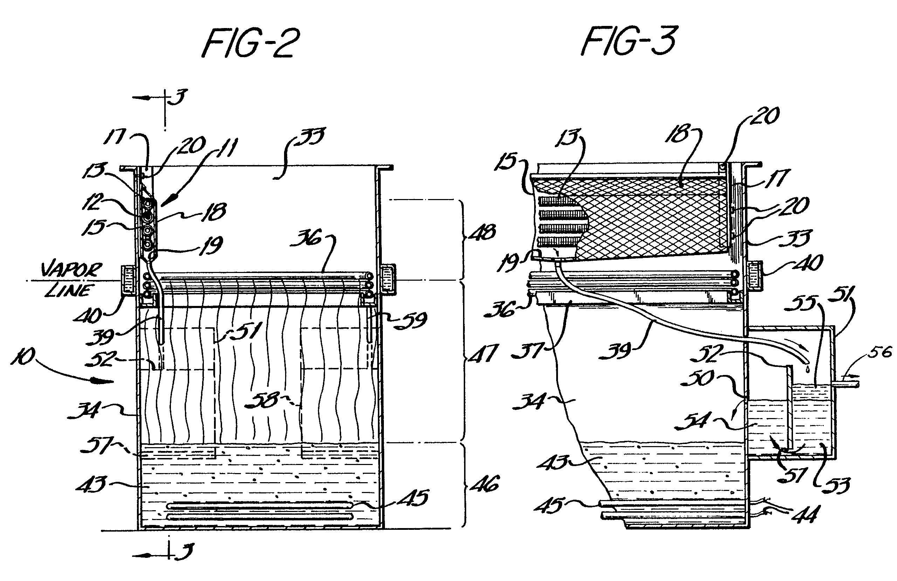

The several zones of the degreasing unit with the freeboard chiller 11 is more clearly illustrated in the cross-sectional views of Figs. 2 and 3. For purpose of better clarity of description, the apparatus includes a solvent zone 46, a vapor zone 47 and the freeboard zone 48. Located in the solvent boiling sump 43 (zone 46) is a suitable heating coil 45 connected by leads 44 to a suitable electric source. Condensate collected from the chiller unit 11 may be collected in the chiller trough 19 and separately treated via line 39 in a separator 51 or the condensate may be fed via line 38 and comingled with the condensate from the primary condensing coils 36 collected in the primary coil condensate trough 37. Collected condensate may be processed in a conventional manner, such as shown in the separator 51 where condensate fed into the entry side 53 is separated with a top water layer 55 that is discharged at 56 and the solvent layer is returned to the solvent boiling sump 43 via the passage 57 underneath the separator partition 52 to the delivery side 54 of the separator and through the discharge opening 50. As illustrated in Fig. 2 an independent separator 58 fed by line 59 may be used for the condensate collected by the primary condensing coils 36 and another separator 51 for the condensate from the freeboard chiller 11; although, as referred to above, the condensates from both the freeboard chiller 11 and primary coils 36 may be collected and treated in a single separator.

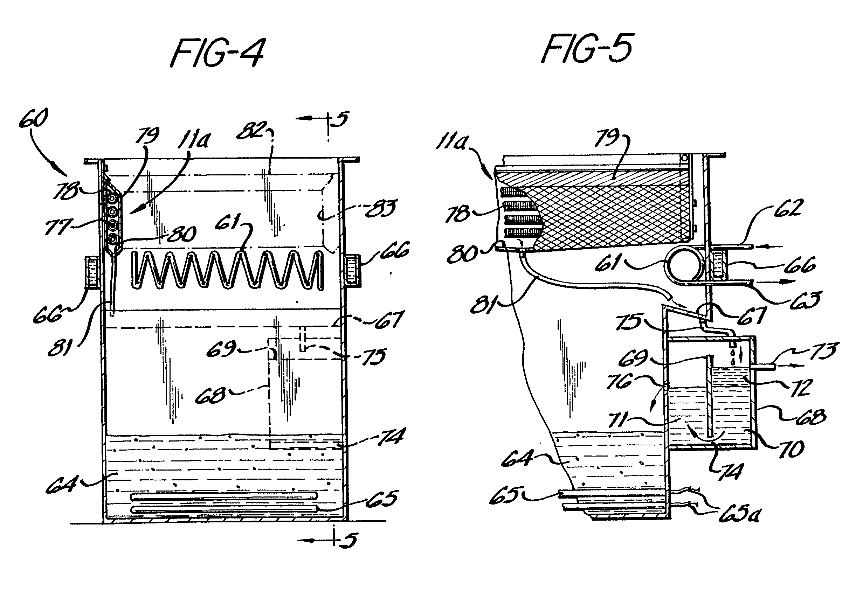

The space advantage of the invention is described by reference to Figs. 4 and 5. As shown, the degreasing or cleaning unit 60 is equipped with a single helical primary condensing coil 61 on one of the interior transverse walls of the apparatus. The unit includes a sump 64 with heater 65 connected to electrical means 65a and water jacket 66 that function as described above by reference to corresponding parts in Figs. 1—3. By use of the freeboard chiller module 11a which is mounted only on one longitudinal interior wall only of the degreaser, restriction of the opening over a conventional installation where the cold blanket generating unit would surround the opening as shown by phantom lines 82 and 83 is minimized. Preferably this freeboard chiller, i.e. the second condenser is spaced from 10 to 18 cm above the vapor line defined by the first condenser. The arrangement shown in Figs. 4 and 5 in other respects is similar to that described by reference to Figs. 1—3, i.e., the freeboard chiller includes cooling coils 77 with fins 78, a guard 79, condensate collection trough 80 and condensate discharge line 81. The degreasor tank includes a water jacket 66, a primary condensate collection trough 67 into which the condensate from both

the unit 11a and primary coil 61 are collected. The combined condensate as best shown in Fig. 5 passes into the separator from the trough 67 through line 75 to the entry side 70 of the separator 68. In the separator, the water (lighter layer 72 is discharged at 73 and the heavier solvent layer flows through passage 74 beneath the separator partition 69 into the boiling solvent sump 64 through passage 76.

## Claims

1. An apparatus comprising:
(a) an open-top receptacle adapted to be partially filled with a volatile solvent,
(b) means adjacent the bottom of said receptacle for containing the solvent to be vaporized, and means to vaporize the solvent,
(c) a first condenser supported by said receptacle spaced above the solvent for condensing vapors generated from said solvent and thereby defining the upper limit of a vapor zone above the solvent,
(d) a retrofittable second condenser supported by said receptacle above said first condenser and below the upper edge of the receptacle for condensing solvent vapors not condensed by said first condenser, said second condenser being provided on one portion only of the interior of said open top receptacle and generating a cold air barrier that extends over the top of the vapor zone, and
(e) a condensate collection trough below the elevation of said first condenser for collecting condensate and preventing condensed moisture from mixing with the solvent.

2. Apparatus according to claim 1 wherein the second condenser is disposed within 15 cm above the vapor line defined by said first condenser.

3. Apparatus according to claim 1 or 2 wherein a second condenser collection trough is situated below said second condenser.

4. Apparatus according to claim 1, 2 or 3 wherein the second condenser comprises
(a) a plurality of coolant coils mounted on a support,
(b) a protective guard for said coils, said coil guard being mounted on said coil support, and
(c) means for attaching said support so that the second condenser occupies only a portion of the peripheral interior of said open top receptacle.

5. Apparatus according to claim 4 wherein said second condenser further comprises a condensate collector trough mounted on said coil support and disposed at an elevation below said coils for receiving condensate generated by said coils.

6. A method for condensing solvent vapors generated in an open-top receptacle before they can be discharged into the atmosphere, the method comprising the steps of:
(a) using a first condenser to define a vapor zone immediately above the solvent in said receptable, and
(b) entraining a substantial portion of the solvent vapors not condensed by said first condenser by a cold air barrier which is generated from a second cooling source on only one side of the interior of said open top receptacle and migrates across and forms a blanket above said first condenser, said second cooling source being provided by a retrofitted second condenser disposed only on a portion of the interior of said receptacle.

7. A method according to claim 6 wherein said blanket is generated 10 to 18 cm above the vapor line defined by said first condenser.

8. A method according to claim 6 or 7 wherein condensate from said second cooling source is collected separately from the condensate collected by the first condenser.

## Patentansprüche

1. Vorrichtung mit:
(a) einem oben offenen Behältnis, das geeignet ist, teilweise mit einem flüssigen Lösungsmittel gefüllt zu werden,
(b) Einrichtungen angrenzend am Boden des Behältnisses, um das zu verdampfende Lösungsmittel zu enthalten, und Einrichtungen zum Verdampfen des Lösungsmittels,
(c) einem ersten Kondensor, der von dem Behältnis im Abstand oberhalb des Lösungsmittels getragen wird, um von dem Lösungsmittel entwickelte Dämpfe zu kondensieren und so die obere Grenze einer Dampfzone oberhalb des Lösungsmittels zu definieren,
(d) einem aufsetzbaren zweiten Kondensor, der von dem Behältnis oberhalb des ersten Kondensors und unterhalb der Oberkante des Behältnisses getragen wird, um von dem ersten Kondensor nicht kondensierte Lösungsmitteldämpfe zu kondensieren, wobei der zweite Kondensor nur auf einem Teil des Inneren des oben offenen Behältnisses vorgesehen ist und eine Kaltluftbarriere erzeugt, die sich über das obere Ende der Dampfzone erstreckt, und
(e) einem Kondensatsammeltrog unterhalb der Höhe des ersten Kondensors, um Kondensat zu sammeln und kondensierte Feuchtigkeit daran zu hindern, sich mit dem Lösungsmittel zu vermischen.

2. Vorrichtung nach Anspruch 1, bei der der zweite Kondensor innerhalb von 15 cm oberhalb der Dampflinie angeordnet ist, die von dem ersten Kondensor definiert wird.

3. Vorrichtung nach Anspruch 1 oder 2, bei der ein zweiter Kondensorsammeltrog unterhalb des zweiten Kondensors angeordnet ist.

4. Vorrichtung nach Anspruch 1, 2 oder 3, bei der der zweite Kondensor
(a) mehrere auf einem Träger befestigte Kühlschlangen,
(b) eine Schutzeinrichtung für diese Kühlschlangen, wobei die Schutzeinrichtung auf dem Schlangenträger befestigt ist, und
(c) Einrichtungen zur derartigen Befestigung des Trägers, das der zweite Kondensor nur einen Teil des Innenumfanges des oben offenen Behältnisses einnimmt, aufweist.

5. Vorrichtung nach Anspruch 4, bei der der zweite Kondensor außerdem einen Kondensatsammeltrog aufweist, der auf dem Schlangenträger befestigt ist und in einer Höhe unterhalb der Schlangen zur Aufnahme von durch die Schlangen erzeugtem Kondensat angeordnet ist.

6. Verfahren zum Kondensieren von Lösungsmitteldämpfen, die in einem oben offenen Behältnis erzeugt werden, bevor sie in die Atmosphäre abgegeben werden können, mit den Stufen, bei denen man:

(a) einen ersten Kondensor verwendet, um eine Dampfzone unmittelbar oberhalb des Lösungsmittels in den Behältnis zu definieren, und

(b) einen wesentlichen Teil der von dem ersten Kondensor nicht kondensierten Lösungsmitteldämpfe durch eine Kaltluftbarriere führt, die von einer zweiten Kühlquelle nur auf einer Seite des Inneren des oben offenen Behältnisses erzeugt wird und über den ersten Kondensor wandert und oberhalb des desselben eine Decke bildet, wobei die zweite Kühlquelle mit einem aufgesetzten zweiten Kondensor versehen ist, der nur auf einem Teil des Inneren des Behältnisses angeordnet ist.

7. Verfahren nach Anspruch 6, bei dem die Decke 10 bis 18 cm oberhalb der Dampflinie, die von dem ersten Kondensator definiert wird, erzeugt wird.

8. Verfahren nach Anspruch 6 oder 7, bei dem Kondensat von der zweiten Kühlquelle getrennt von dem durch den ersten Kondensor gesammelten Kondensat gesammelt wird.

**Revendications**

1. Un appareil comprenant:
(a) un récipient à sommet ouvert adapté pour être partiellement rempli d'un solvant volatil,
(b) un moyen adjacent au fond dudit récipient pour contenir le solvant à vaporiser et un moyen pour vaporiser le solvant,
(c) un premier réfrigérant supporté par ledit récipient, espacé au-dessus du solvant pour condenser les vapeurs générées à partir dudit solvant et définissant par là la limite supérieure d'une zone de vapeur au-dessus du solvant,
(d) un second réfrigérant rajustable supporté par ledit récipient au-dessus dudit premier réfrigérant et en dessous du bord supérieur du récipient pour condenser les vapeurs de solvant non condensées par ledit premier réfrigérant, ledit second réfrigérant étant fourni sur une portion seulement de l'intérieur dudit récipient à sommet ouvert et générant une barrière d'air froid qui s'étend sur le dessus de la zone de vapeur, et
(e) un bac de collection de condensat en-dessous de l'élévation dudit premier réfrigérant pour collecter le condensat et empêcher l'humidité condensée de se mélanger avec le solvant.

2. Appareil selon la revendication 1 dans lequel le second réfrigérant est disposé dans les 15 cm au-dessus de la ligne de vapeur définie par ledit premier réfrigérant.

3. Appareil selon la revendication 1 ou 2, dans lequel un second bac de collection de condensat est situé en dessous dudit second réfrigérant.

4. Appareil selon la revendication 1, 2 ou 3, dans lequel le second réfrigérant comprend:
(a) une pluralité de serpentins de refroidissement montés sur un support,
(b) une garde de protection pour lesdits serpentins, ladite garde des serpentins étant montée sur ledit support de serpentins, et
(c) un moyen pour fixer ledit support de manière que le second réfrigérant n'occupe qu'une portion de l'intérieur de la périphérie dudit récipient à sommet ouvert.

5. Appareil selon la revendication 4 dans lequel ledit second réfrigérant comprend en outre un bac de collection de condensat monté sur ledit support de serpentin, et disposé à une élévation en dessous desdits serpentins pour recevoir le condensat généré par lesdits serpentins.

6. Un procédé pour condenser les vapeurs de solvant générées dans un récipient à sommet ouvert avant qu'elles ne puissent être déchargées dans l'atmosphère, le procédé comprenant les étapes suivantes:
(a) l'utilisation d'un premier réfrigérant pour définir une zone de vapeur immédiatement au-dessus du solvant dans ledit récipient, et
(b) l'entraînement d'une portion considérable des vapeurs de solvant non condensées par ledit premier réfrigérant à l'aide d'une barrière d'air froid qui est générée à partir d'une seconde source de refroidissement sur un seul côté de l'intérieur dudit récipient à sommet ouvert et qui migre à traverse et forme une nappe au-dessus dudit premier réfrigérant, ladite seconde source de refroidissement étant munie d'un second réfrigérant rajusté, disposé seulement sur une portion de l'intérieur dudit récipient.

7. Un procédé selon la revendication 6 dans lequel ladite nappe est générée à 10 à 18 cm au-dessus de la ligne de vapeur définie par ledit premier réfrigérant.

8. Un procédé selon la revendication 6 ou 7, dans lequel le condensat de ladite seconde source de refroidissement est collecté séparément du condensat collecté par le premier réfrigérant.

FIG-1

REFRIGERATION
LIQUID IN

HOT GAS
(DEFROST)

REF. GAS
RETURN

0 112 484

FIG-2

FIG-3

VAPOR LINE

0 112 484

## FIG-4

## FIG-5